# EUROPEAN PATENT SPECIFICATION

(11) **EP 4 414 949 B1**
(45) Date of publication and mention of the grant of the patent: **26.08.2026**
(21) Application number: 22897669.2
(22) Date of filing: 16.11.2022
(51) Int. Cl.: G06V 20/59, G06V 40/20, G06N 3/08

(54) **OCCUPANCY SAFETY CONTROL METHOD AND APPARATUS, AND ELECTRONIC DEVICE AND PRODUCT**
BELEGUNGSSICHERHEITSSTEUERUNGSVERFAHREN UND -VORRICHTUNG SOWIE ELEKTRONISCHE VORRICHTUNG UND PRODUKT
PROCÉDÉ ET APPAREIL DE COMMANDE DE SÉCURITÉ D'OCCUPATION, DISPOSITIF ÉLECTRONIQUE ET PRODUIT

(30) Priority: 26.11.2021 CN 202111425839
(43) Date of publication of application: 14.08.2024
(73) Proprietor: Great Wall Motor Company Limited, Baoding, Hebei 071000 (CN)
(72) Inventor: LIU, Lijuan, Baoding, Hebei 071000 (CN); LIU, Jing, Baoding, Hebei 071000 (CN); WANG, Yan, Baoding, Hebei 071000 (CN)
(74) Representative: Klunker IP Patentanwälte PartG mbB
(86) International application number: PCT/CN2022/132206
(87) International publication number: WO 2023/093586

(56) References cited:
- CN-A- 111 460 978
- CN-A- 115 035 498
- CN-U- 206 031 279
- JP-A- 2021 115 975
- US-A1- 2021 009 150
- US-B2- 11 040 695
- LEI QING ET AL: "A Survey of Vision-Based Human Action Evaluation Methods", SENSORS, vol. 19, no. 19, 24 September 2019 (2019-09-24), CH, pages 4129, XP093109409, ISSN: 1424-8220, DOI: 10.3390/s19194129
- AIYUBA: "High-tech new system: predictable wrong driving", 23 April 2015 (2015-04-23), pages 1 - 4, XP093068502, Retrieved from the Internet <URL:http://edu.sina.com.cn/en/2015-04-23/093489201.shtml> [retrieved on 20230728]

## Description

### TECHNICAL FIELD

The present invention relates to the field of vehicle-riding safety and, more particularly, to a method and an electronic device for controlling vehicle-riding safety, and a computer program product.

### BACKGROUND

The occupancy monitoring system (OMS) is an extension of the driver monitor system (DMS) and can detect whether the passengers that ride in a vehicle (especially the children) have a danger. When a danger happens, the OMS alarms.

All of the current OMS systems alarm when a danger has already happened and cannot prevent a danger from happening.

US 11 040 695 B2 discloses methods, systems and apparatuses which conduct an automated vision analysis of image data associated with an interior of a vehicle cabin, determine a state of a child restraint system (CRS) based on the automated vision analysis, and generate an alert if the state of the CRS does not satisfy one or more safety constraints e.g. identified based on a geographic location of the vehicle cabin.

### SUMMARY

In view of the above, it is an object of the present invention to provide a method and an electronic device for controlling vehicle-riding safety, a computer program product and non-transitory computer-readable storage medium to solve the problem that all of the current OMS systems alarm when a danger has already happened, and cannot prevent a danger from happening.

The object is achieved by the features of independent claim 1 regarding the method, of independent claim 8 regarding the electronic device, of independent claim 9 regarding the computer program product, and of independent claim 10 regarding the non-transitory computer-readable storage medium. Further embodiments are defined in the dependent claims.

Hence, the method for controlling the vehicle-riding safety according to the present invention includes firstly determining, from the objects that ride in the vehicle, the target object that is required to be monitored; obtaining the action trajectory of the target object; based on the movement trajectory of the target object, predicting the target action of the target object at a future moment; and based on the target action performed by the target object at the future moment and the vehicle state, further determining the dangerous situation of the target object, and executing a control strategy corresponding to the dangerous situation. In other words, when it is predicted that a danger happens at a future time, then the control strategy is executed, thereby the object of early warning is realized, and a danger is prevented from happening.

### BRIEF DESCRIPTION OF THE DRAWINGS

In order to more clearly illustrate the technical solutions of the present invention or the prior art, the drawings that are required to describe the embodiments or the prior art will be briefly described below.
FIG. 1 is a schematic diagram of a hardware architecture;
FIG. 2 is a flow chart of a method for controlling vehicle-riding safety;
FIG. 3 is a schematic diagram of a process of extracting the articulation points of the target object in the images by an articulation-point predicting model;
FIG. 4 is a schematic diagram of the placement of region blocks in a human-body gesture;
FIG. 5 is a schematic diagram simulating a target region where a contour of a target body part is located when the target body part is executing a target action;
FIG. 6 is a structural diagram of an apparatus for controlling vehicle-riding safety; and
FIG. 7 is a block diagram of an apparatus configured for an electronic device.

### DETAILED DESCRIPTION

The technical solutions of the present invention will be clearly and completely described below with reference to the drawings.

A method and apparatus for controlling vehicle-riding safety, an electronic device and a product are provided. Before the technical solutions of the present invention are described, the hardware architecture involved will be described firstly.

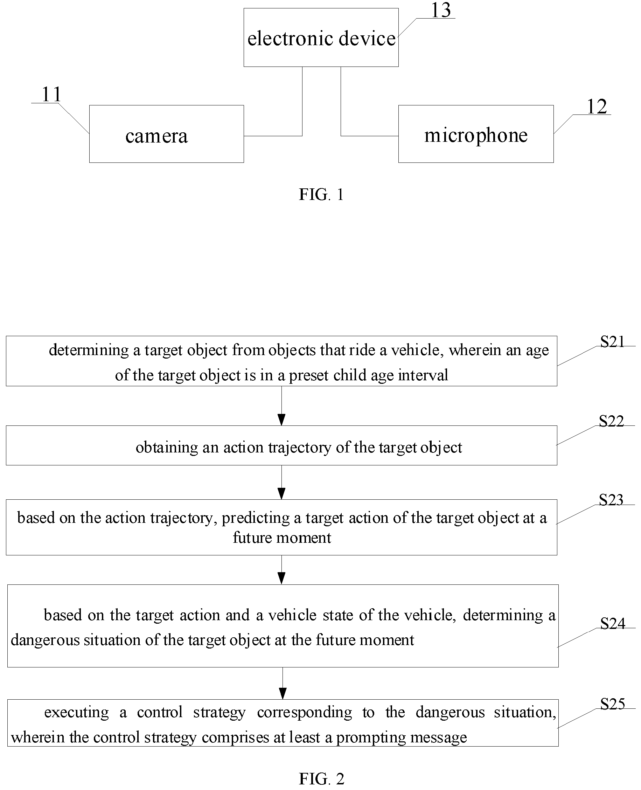

As shown in FIG. 1, FIG. 1 is a schematic diagram of a hardware architecture. The hardware architecture includes a camera 11, a microphone 12 and an electronic device 13.

It can be understood that the camera 11, the microphone 12 and the electronic device 13 are disposed in a vehicle.

As an example, one or more cameras 13 may be disposed in the vehicle. As an example, one or more microphones 12 may be disposed in the vehicle.

As an example, the camera 11 may be a 3D camera or a 2D camera.

As an example, the electronic device 13 may include a memory and a processor.

As an example, the electronic device 13 is connected to the camera 11 and the microphone 12, and the electronic device 13 may obtain the video and/or image collected by the camera 11 and obtain the voice information collected by the microphone 12.

As an example, the electronic device 13 may analyze the video and/or image collected by the camera 11.

As an example, the electronic device 13 may analyze the voice information collected by the microphone 12.

As an example, the electronic device 13 may send the video and/or image collected by the camera 11 to a server, to cause the server to analyze the video and/or image collected by the camera 11, and receive the analysis result returned by the server.

As an example, the electronic device 13 may send the voice information collected by the microphone 12 to a server, to cause the server to analyze the voice information collected by the microphone 12, and receive the analysis result returned by the server.

Optional, the hardware architecture may further include a radar sensor, and the radar sensor may be disposed in the vehicle.

As an example, the radar sensor may be arranged at the positions such as the car door and the seat.

Optional, the hardware architecture may further include a temperature sensor.

It should be noted that a person skilled in the art can understand that the structure of the hardware architecture shown in FIG. 1 does not limit the hardware architecture, and the hardware architecture may include components more or fewer than those shown in FIG. 1 or a combination of some of the components, or has a different arrangement of the components.

The method for controlling the vehicle-riding safety according to the present invention will be described below with reference to the above-described hardware architecture.

As shown in FIG. 2, FIG. 2 is a flow chart of a method for controlling vehicle-riding safety according to the present invention. The method may be applied to the above-described electronic device 13. The method, in the implementing process, may include the following steps S21 to S25.

Step S21: determining a target object from objects that ride in a vehicle.

Optionally, the age of the target object is in a preset age interval.

As an example, the preset age interval is from 0 year to 12 years.

As an example, the preset age interval may be any one of (0 year, 1 year], (1 year, 4 years], (4 years, 7 years] and (7 years, 12 years].

Optionally, when the target object is determined based on the age, then the step S21 has various implementations, and the embodiments of the present application provide, without limitation, the following three implementations.

In the first implementation of the step S21, the user, before riding in the vehicle, inputs in advance the ages of the objects sitting in the seats by using an inputting device in the vehicle, thus it can be determined which seat the target object is sitting in.

The second implementation of the step S21 includes the following steps A11 to A13.

Step A11: collecting human-face images of the objects that ride in the vehicle.

Step A12: inputting the human-face images of the objects into an age identifying model that is pre-constructed, to obtain the ages corresponding to the objects outputted by the age identifying model.

As an example, a machine-learning model may be trained by using human-face images of sample users as sample human-face images and using actual ages of the sample users as the training target, to obtain the age identifying model.

As an example, the process of training the age identifying model involves at least one of the techniques in machine learning such as artificial neural network, belief network, reinforcement learning, transfer learning, inductive learning and style teaching learning.

As an example, the age identifying model may be any one of a neural network model, a logistic regression model, a linear regression model, Support Vector Machine (SVM), Adaboost, XGboost and the Transformer-Encoder model.

As an example, the age identifying model may be any one of a model based on recurrent neural network, a model based on convolutional neural network and a classification model based on Transformer-encoder.

Step A13: based on the ages corresponding to the objects, from the objects, determining the target object whose age is in the preset age interval.

The third implementation of the step S21 includes the following steps A21 to A27, wherein the following steps A21 to A26 are executed to each of the objects.

Step A21: collecting in real time a video containing the objects by using a 3D camera.

Step A22: obtaining a plurality of frame images contained in the video.

Step A23: establishing a plane coordinate system in each of the plurality of frame images.

As an example, the process of establishing a plane coordinate system in each of the images includes: identifying a position of a nasal tip of the object in the image; and setting the position of the nasal tip to be the origin of the coordinate system, and setting the nasal bridge line to be the y-axis, to establish the coordinate system.

Step A24: tracking and locating the human face of the object in the plurality of frame images, extracting the human-face features of the object and placing into the plane coordinate system, to obtain an optimum human-face image from the plurality of frame images.

As an example, the optimum human-face image is a direct image of the face in which the two eyes completely fall within the plane coordinate system and the pixels are clear.

Step A25: extracting the human-face features of the optimum human-face image.

As an example, extracting the human-face features specifically includes: extracting position numerical values in the plane coordinate system of the eyebrows, the eyes, the ears, the nose and the mouth; extracting quantity numerical values in the plane coordinate system of the eyebrows, the eyes, the ears, the nose and the mouth; extracting the position numerical values in the plane coordinate system of the human-face contour; and extracting the skin-color numerical value of the human face.

Step A26: based on the human-face features, determining the age of the object.

Step A27: based on the ages of the objects that ride in the vehicle, from the objects, determining the target object whose age is in the preset age interval.

Optionally, the target object is a person having mental retardation.

Optionally, when the target object is determined based on whether he has mental retardation, then the step S21 has various implementations, and the embodiments of the present application provide, without limitation, the following implementations.

The user, before riding in the vehicle, inputs in advance the intelligence situations of the objects sitting in the seats by using an inputting device in the vehicle, thus it can be determined which seat the target object is sitting in.

Optionally, the target object is a disabled person having difficulty in moving.

Optionally, when the target object is determined based on whether he has difficulty in moving, then the step S21 has various implementations, and the embodiments of the present application provide, without limitation, the following implementation.

The user, before riding in the vehicle, inputs in advance the situations of body disability of the objects sitting in the seats by using an inputting device in the vehicle, thus it can be determined which seat the target object is sitting in.

Step S22: obtaining an action trajectory of the target object.

Optionally, the step S22 has various implementations, and the embodiments of the present application provide, without limitation, the following two implementations.

The first implementation of the step S22 includes the following steps B11 to B14.

Step B11: obtaining a video containing the target object.

Step B12: obtaining the each frame image contained in the video.

Step B13: obtaining human-body gestures of the target object in each frame image contained in the video, wherein each of the human-body gestures is formed by a plurality of articulation points.

As an example, the articulation points of the target object in the images may be extracted by using an articulation-point predicting model that is pre-constructed.

As an example, the articulation-point predicting model may be any one of a neural network model, a logistic regression model, a linear regression model, Support Vector Machine (SVM), Adaboost, XGboost and the Transformer-Encoder model.

The process of extracting the articulation points of the target object in the images based on the articulation-point predicting model will be described below.

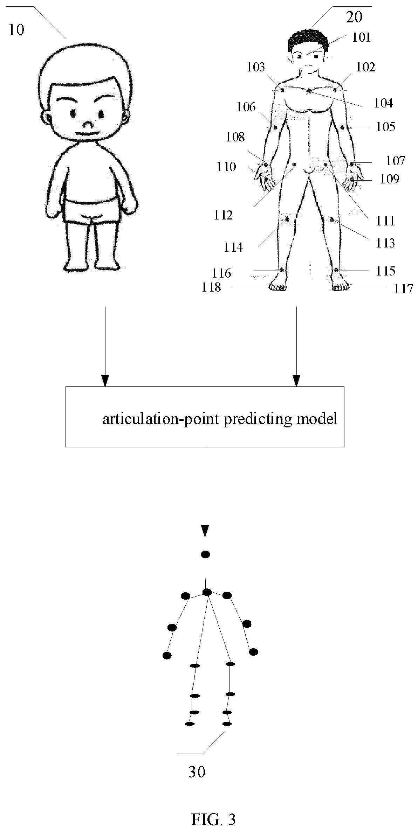

As shown in FIG. 3, FIG. 3 is a schematic diagram of a process of extracting the articulation points of the target object in the images by an articulation-point predicting model according to an embodiment of the present application.

As an example, as shown in FIG. 3, a human-body architecture image 20 includes, without limitation, 18 articulation points, which are a head articulation point 101, a left-shoulder articulation point 102, a right-shoulder articulation point 103, a neck articulation point 104, a left-elbow articulation point 105, a right-elbow articulation point 106, a left-wrist articulation point 107, a right-wrist articulation point 108, a left-palm articulation point 109, a right-palm articulation point 110, a left-hip articulation point 111, a right-hip articulation point 112, a left-knee articulation point 113, a right-knee articulation point 114, a left-ankle articulation point 115, a right-ankle articulation point 116, a left-tiptoe articulation point 117, and a right-tiptoe articulation point 118.

In practical applications, the quantity of the articulation points contained in the human-body architecture image 20 may be less than 18. For example, the human-body architecture image may include merely 14 articulation points of the head articulation point 101, the left-shoulder articulation point 102, the right-shoulder articulation point 103, the neck articulation point 104, the left-elbow articulation point 105, the right-elbow articulation point 106, the left-wrist articulation point 107, the right-wrist articulation point 108, the left-hip articulation point 111, the right-hip articulation point 112, the left-knee articulation point 113, the right-knee articulation point 114, the left-ankle articulation point 115 and the right-ankle articulation point 116.

In practical applications, the quantity of the articulation points contained in the human-body architecture image 20 may be greater than 18. For example, the human-body architecture image may further include a nasal-tip articulation point, a left-ear articulation point, a right-ear articulation point, a left-eye articulation point, a right-eye articulation point and so on.

Regarding each of the images 10 of the each frame image, the image 10 and the human-body architecture image 20 are inputted into the articulation-point predicting model, so that the articulation-point predicting model extracts the articulation points of the target object in the image. The articulation points are connected to obtain the human-body gesture.

As an example, the articulation-point predicting model may output the human-body gesture of the target object that is formed by predicted positions of the articulation points, for example, the image 30 shown in FIG. 3.

Because all of the architectures of human bodies are the same, the human-body architecture image according to the embodiments of the present application is a comparison standard. In other words, the articulation-point predicting model, when obtains the predicted positions of the articulation points in the image, compares them with the positions of the articulation points in the human-body architecture image, for example, comparing the left-shoulder articulation point in the human-body architecture image with the position region where the target object is located in the image, to determine which position within the position region has the highest possibility of being the predicted position of the left-shoulder articulation point. Because in the embodiments of the present application, the human-body model features of the human-body architecture image are used as the comparison standard, the obtained predicted positions of the articulation points in the image are accurate.

Step B14: based on a variation trend of position information of same articulation points in the human-body gestures corresponding to the each frame image, determining the action trajectory of the target object.

It can be understood that the position information of the same one articulation point in the images may be determined, for example, the position information of the head articulation point in the images, so that the variation trend of the head articulation point can be determined. Because the variation trends of the articulation points can be obtained, the action trajectory can be determined.

It can be understood that the action trajectory obtained in a two-dimensional coordinate system might be inaccurate. In view of that, the embodiments of the present application further provide the second implementation of the step S22.

The second implementation of the step S22 includes the following steps B21 to B27.

In the second implementation of the step S22, it is required to arrange a plurality of cameras in the vehicle, so that different cameras can collect the images of the target object in different directions.

Step B21: obtaining videos containing the target object that are collected by the cameras in the different directions.

The following steps B22 to B23 are executed to each of the videos, to obtain the three-dimensional coordinates in the three-dimensional systems of the target object in the each frame image contained in the video.

Step B22: obtaining a plurality of frame images contained in the video.

Step B23: regarding each of the plurality of frame images, obtaining the two-dimensional coordinate (u,v) in the two-dimensional system of the target object in the image, and converting the two-dimensional coordinate into a three-dimensional coordinate (X,Y,Z).

Optionally, the formula of the conversion between the two-dimensional coordinate and the three-dimensional coordinate is as follows:
$S \left[\begin{matrix}u \\ ν \\ 1\end{matrix}\right] = \left[\begin{matrix}{f}_{x} & 0 & {c}_{x} \\ 0 & {f}_{y} & {c}_{y} \\ 0 & 0 & 1\end{matrix}\right] \left[\begin{matrix}{r}_{11} & {r}_{12} & {r}_{13} & {t}_{1} \\ {r}_{21} & {r}_{22} & {r}_{23} & {t}_{2} \\ {r}_{31} & {r}_{32} & {r}_{33} & {t}_{3}\end{matrix}\right] \left[\begin{matrix}X \\ Y \\ Z \\ 1\end{matrix}\right] .$

Given that all of the target objects are on the ground plane, i.e., Z=0, then the above formula may be converted into:
$\left\{\begin{matrix}X = {w}_{1} u + {w}_{2} ν + {b}_{1} \\ Y = {w}_{3} u + {w}_{4} ν + {b}_{2}\end{matrix}\right. ;$
wherein ${w}_{1} = \frac{{f}_{x} {r}_{12}}{{f}_{x} {r}_{12} {f}_{y} {r}_{21} - {f}_{x} {r}_{11} {f}_{y} {r}_{22}}$; ${w}_{2} = \frac{{f}_{y} {r}_{22}}{{f}_{x} {r}_{12} {f}_{y} {r}_{21} - {f}_{x} {r}_{11} {f}_{y} {r}_{22}}$; ${w}_{3} = \frac{{f}_{x} {r}_{11}}{{f}_{y} {r}_{22} {f}_{x} {r}_{11} - {f}_{y} {r}_{21} {f}_{x} {r}_{12}}$; ${w}_{4} = \frac{{f}_{y} {r}_{21} u}{{f}_{y} {r}_{22} {f}_{x} {r}_{11} - {f}_{y} {r}_{21} {f}_{x} {r}_{12}}$; ${b}_{1} = \frac{{f}_{y} {r}_{22} {f}_{x} {t}_{1} - {f}_{x} {r}_{12} {f}_{y} {t}_{2} + {c}_{x} {f}_{y} {r}_{22} - {c}_{y} {f}_{x} {r}_{12}}{{f}_{x} {r}_{12} {f}_{y} {r}_{21} - {f}_{x} {r}_{11} {f}_{y} {r}_{22}}$; and ${b}_{2} = \frac{{f}_{y} {r}_{21} {f}_{x} {t}_{1} - {f}_{x} {r}_{11} {f}_{y} {t}_{2} + {c}_{x} {f}_{y} {r}_{21} - {c}_{y} {f}_{x} {r}_{11}}{{f}_{y} {r}_{22} {f}_{x} {r}_{11} - {f}_{y} {r}_{21} {f}_{x} {r}_{12}}$.

Based on that, the coordinate mapping relation between the two-dimensional coordinate (uᵢ,vᵢ) and the three-dimensional coordinate (Xᵢ,Yᵢ,Zᵢ) may be established by using the least square method, to finally obtain the following mapping relation:
$\left\{\begin{matrix}{X}_{i} = {w}_{1} {u}_{i} + {w}_{2} {ν}_{i} + {b}_{1} \\ {Y}_{i} = {w}_{3} {u}_{i} + {w}_{4} {ν}_{i} + {b}_{2} \\ {Z}_{i} = 0\end{matrix}\right. .$

Step B24: adding the three-dimensional coordinates of the target object in the images contained in the each video into the three-dimensional system of coordinate.

All of the videos include the images of the same quantity, and the time of the images corresponds. For example, totally three cameras are arranged in different directions, which are a camera 1 (the video collected by the camera 1 is referred to as the video 1), a camera 2 (the video collected by the camera 2 is referred to as the video 2) and a camera 3 (the video collected by the camera 3 is referred to as the video 3). Each of the videos collected by the three cameras includes M frame images, and the collection time of the i-th frame image of the video 1 = the collection time of the i-th frame image of the video 2 = the collection time of the i-th frame image of the video 3, wherein the value of i is any numerical value from 1 to M.

Step B25: obtaining a plurality of three-dimensional-position sets, wherein each of the three-dimensional-position sets includes the three-dimensional coordinates corresponding to the same collection time.

For example, the three-dimensional-position set i includes the three-dimensional coordinate of the target object in the i-th frame image of the video 1, the three-dimensional coordinate of the target object in the i-th frame image of the video 2 and the three-dimensional coordinate of the target object in the i-th frame image of the video 3.

Step B26: inputting each of the three-dimensional-position sets into a gesture identifying model that is pre-constructed, to obtain the human-body gesture corresponding to the three-dimensional coordinates.

As an example, the gesture identifying model may be any one of a neural network model, a logistic regression model, a linear regression model, Support Vector Machine (SVM), Adaboost, XGboost and the Transformer-Encoder model.

Step B27: regarding any two three-dimensional-position sets whose time is consecutive, connecting the corresponding articulation points in the human-body gestures corresponding to the two three-dimensional-position sets, to obtain the action trajectory in the three-dimensional system.

The time corresponding to the three-dimensional-position set refers to the time of the collection of the images corresponding to the three-dimensional coordinates contained by the three-dimensional-position set.

It can be understood that the corresponding articulation points in the human-body gestures corresponding to the two three-dimensional-position sets refer to the articulation points that have the same name.

The embodiments of the present application can restore the information of the position variation of the target object in the true space, and can realize fusing the information of the target object collected by the plurality of cameras at the same time, to provide more information to high-level behavior analysis on the target object.

Step S23: based on the action trajectory, predicting a target action of the target object at a future moment.

Optionally, the step S23 has various implementations, and the embodiments of the present application provide, without limitation, the following two implementations.

The first implementation of the step S23 includes the following step C11.

Step C11: inputting the action trajectory into an action predicting model that is pre-constructed, to obtain the target action outputted by the action predicting model.

The action predicting model is obtained by training a machine-learning model by using sample action trajectories as the input and using the result of the marking of the sample target actions corresponding to the sample action trajectories as the output.

It can be understood that different behavior trajectories of children in vehicles may be collected in advance, for example, the behavior trajectory of opening a car window, the behavior trajectory of opening a car door, the behavior trajectory of sliding down from a safety seat, the behavior trajectory of untieing a safety belt, and the behavior trajectory of placing a limb adjacent to a car door.

It can be understood that each of the above-described collected behavior trajectories includes an action trajectory and a target action. The action trajectory refers to the trajectory before the target action happens. In other words, each of the above-described behavior trajectories may be split into the action trajectory and the target action. The target actions may be marked artificially or by machine, to obtain the marking results. For example, the marking results may include a target action of touching and pressing a car-window opening press key, a target action of pulling a car-door handle, a target action of placing a limb into a car-door gap, a target action of untieing a safety belt, and a target action of sliding down from a safety seat.

In the embodiments of the present application, the action trajectories split from the behavior trajectories are referred to as the sample action trajectories, and the marking results of the target actions are the marking results of the sample target actions.

The second implementation of the step S23 includes the following step C21.

Step C21: comparing the action trajectory with predetermined trajectories corresponding to the actions, and determining the action corresponding to the trajectory matched with the action trajectory to be the target action.

It can be understood that, before children perform the target actions, there are certain fixed trajectories. For example, regarding the action of pulling a car-door handle, the trajectories corresponding to it include a trajectory of approaching the car door and a trajectory of stretching a hand to the door handle. The action trajectory may be compared with the predetermined trajectories, and when the action trajectory matches with a target trajectory, then the target action corresponding to the action trajectory is the action corresponding to the target trajectory.

Step S24: based on the target action and a vehicle state of the vehicle, determining a dangerous situation of the target object at the future moment.

Step S25: executing a control strategy corresponding to the dangerous situation, wherein the control strategy includes at least a prompting message, and the prompting message is for prompting other objects than the target object that ride in the vehicle that the target object is about to be in danger.

Optionally, different dangerous situations correspond to different control strategies.

Optionally, different dangerous situations correspond to the same control strategy.

As an example, the prompting message may be a voice message or a video message.

The method for controlling the vehicle-riding safety according to the embodiments of the present application includes firstly determining, from the objects that ride in the vehicle, the target object that is required to be monitored; obtaining the action trajectory of the target object; and based on the movement trajectory of the target object, predicting the target action of the target object at a future moment; and based on the target action and the vehicle state, further determining the dangerous situation of the target object, and executing a control strategy corresponding to the dangerous situation. In other words, when it is predicted that a danger happens at a future time, then the control strategy is executed, thereby the object of early warning is realized, and a danger is prevented from happening.

Optionally, the step S24 has various implementations, and the embodiments of the present application provide, without limitation, the following two implementations.

The first implementation of the step S24 includes the following step D11.

Step D11: inputting the target action and the vehicle state into a danger predicting model that is pre-constructed, to obtain the dangerous situation outputted by the danger predicting model.

As an example, the danger predicting model is obtained by training a machine-learning model by using sample target actions corresponding to sample objects and sample vehicle states as the input and using marked dangerous situations corresponding to the sample objects as the training target.

It can be understood that the sample target actions of the sample objects and the marked dangerous situations corresponding to the sample vehicle states are already known, and thus can be used for the training to obtain the danger predicting model.

As an example, the process of training the danger predicting model involves at least one of the techniques in machine learning such as artificial neural network, belief network, reinforcement learning, transfer learning, inductive learning and style teaching learning.

As an example, the danger predicting model may be any one of a neural network model, a logistic regression model, a linear regression model, Support Vector Machine (SVM), Adaboost, XGboost and the Transformer-Encoder model.

As an example, the danger predicting model may be any one of a model based on recurrent neural network, a model based on convolutional neural network and a classification model based on Transformer-encoder.

The second implementation of the step S24 includes the following steps D21 to D22.

Step D21: obtaining a target region where the target object is located when the target object is executing the target action.

Step D22: when at least local region of the target region is not located within a safe region that is predetermined, based on the vehicle state of the vehicle and a dangerous region where the at least local region is belonged, determining the dangerous situation of the target object at the future moment.

Optionally, the step D21 has various implementations, and the embodiments of the present application provide, without limitation, the following two implementations.

The first implementation of the step D21 includes the following steps D210 to D214.

Step D210: obtaining an age of the target object.

The process of obtaining the age of the target object may be referred to the above-described process of age determination involved in the process of determining the target object based on the age, and is not discussed further herein.

Step D211: from a predetermined corresponding relation between ages and body-height thresholds, looking up a target body-height threshold of the target object corresponding to an age.

As an example, the standard body heights of different ages are different, and the corresponding relation between the ages and the body-height thresholds may be obtained based on the standard body heights corresponding to the ages.

Step D212: based on the target body-height threshold and the human-body gestures of the target object, obtaining contours of body parts of the target object.

As an example, the lengths of the body parts of the target object may be estimated based on the target body-height threshold, for example, the length of the trunk, the lengths of the legs and the lengths of the arms.

As an example, a target body-weight threshold of the target object corresponding to an age may be looked up from a predetermined corresponding relation between ages and body-weight thresholds.

As an example, the widths of the body parts of the target object may be estimated based on the target body-weight threshold.

As an example, the body parts include but are not limited to the head, the left arm, the right arm, the left leg, the right leg, the left foot, the right foot, the left hand and the right hand.

As an example, the contour of the body part may be the largest contour.

As an example, the contour of the body part contains the articulation points located at the body part.

As an example, the body part where the head articulation point is belonged is the head. The body part where the neck articulation point is belonged is the neck. The body part where the left-shoulder articulation point, the left-elbow articulation point and the left-wrist articulation point are belonged is the left arm. The body part where the left-palm articulation point is belonged is the left hand. The body part where the right-shoulder articulation point, the right-elbow articulation point and the right-wrist articulation point are belonged is the right arm. The body part where the right-palm articulation point is belonged is the right hand. The body part where the left-hip articulation point, the left-knee articulation point and the left-ankle articulation point are belonged is the left leg. The body part where the right-hip articulation point, the right-knee articulation point and the right-ankle articulation point are belonged is the right leg. The body part where the left-tiptoe articulation point is belonged is the left foot. The body part where the right-tiptoe articulation point is belonged is the right foot.

As an example, the implementation of the step D212 specifically includes the following steps D2121 to D2122.

Step D2121: based on the target body-height threshold, determining the lengths of the body parts of the target object, to obtain the region blocks corresponding to the body parts.

It can be understood that each of the region blocks has two numerical values, the length and the width. As an example, the widths of the body parts may be determined based on the target body-weight threshold, to obtain the widths of the region blocks.

As an example, the lengths and the widths of the region blocks corresponding to the body parts may be determined merely based on the target body-height threshold.

Step D2122: based on the body parts where the articulation points in the human-body gesture of the target object are belonged, regarding each of the body parts, placing the region block of the corresponding length of the body part into the human-body gesture, wherein the region block contains the articulation points located at the body part, and the region block is the contour of the body part.

As an example, in the process of placing the region blocks, the region blocks of the body parts may be placed by using the neck articulation point as the origin.

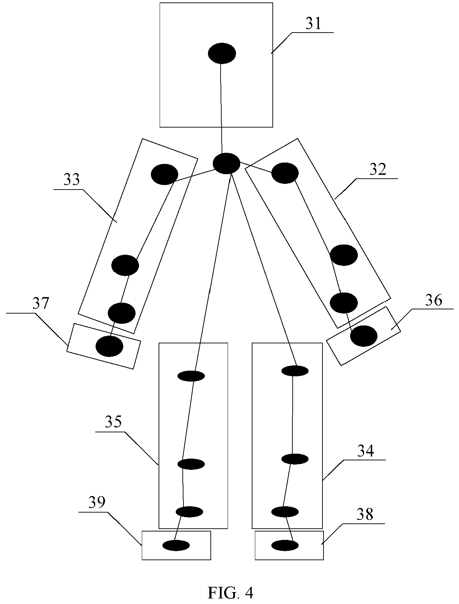

As shown in FIG. 4, FIG. 4 is a schematic diagram of the placement of region blocks in a human-body gesture according to an embodiment of the present application.

Still taking FIG. 3 as an example, the region blocks of the head, the left arm, the right arm, the left leg, the right leg, the left hand, the right hand, the left foot and the right foot are the region block 31, the region block 32, the region block 33, the region block 34, the region block 35, the region block 36, the region block 37, the region block 38 and the region block 39 respectively.

FIG. 4 is illustrated by taking the case as an example in which the region blocks are rectangles. As an example, the shapes of the region blocks may also be polygons, and the shapes of the region blocks of different body parts may be different.

Step D213: determining a target body part executing the target action of the target object.

For example, when the target action is an action of touching and pressing a car-window opening press key, then the executing target body part is the left hand or the right hand. When the target action is an action of pulling a car-door handle, then the executing target body part is the left hand or the right hand. When the target action is an action of placing a foot into a car-door gap, then the executing target body part is the left foot or the right foot. When the target action is an action of sliding down from a safety seat, then the executing target body part is the left foot and/or the right foot. When the target action is an action of untieing a safety belt, then the executing target body part is the left foot or the right foot.

Step D214: based on a position information of a contour of the target body part at a current time, determining the target region where the contour of the target body part is located when the target body part is executing the target action.

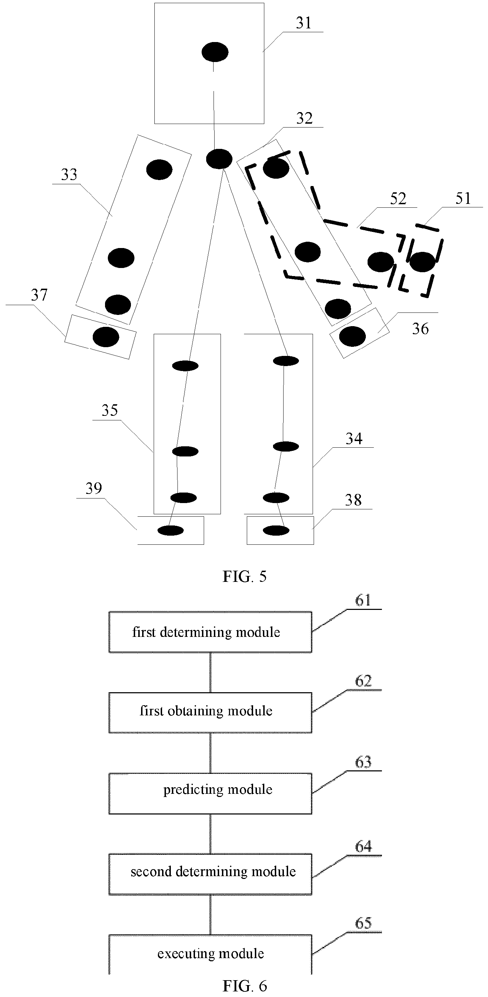

As shown in FIG. 5, FIG. 5 is a schematic diagram simulating a target region where the contour of a target body part is located when the target body part is executing a target action according to an embodiment of the present application.

Still taking FIG. 4 as an example, assuming that the action of the target object is an action of pulling a car-door handle, then the process of the target body part executing the target action can be simulated in advance. Assuming that the target body part is the left hand, in FIG. 5 the solid-line block 32 represents the position of the left arm at the current time, and the solid-line block 36 represents the position of the left hand at the current time. In FIG. 5, the dotted-line block 51 represents the contour of the left hand when the left hand is executing the action of pulling the car-door handle, and the dotted-line block 52 represents the contour of the left arm when the left hand is executing the action of pulling the car-door handle. Accordingly, the target region can be determined.

The second implementation of the step D21 includes the following steps D221 to D223.

Step D221: determining a target body part executing the target action of the target object.

Step D222: obtaining, when the target body part of same-age objects whose ages are the same as the age of the target object is executing the target action, candidate regions where the target body part is located.

Step D223: based on the candidate regions corresponding to the target body part of the same-age objects, determining the target region where the target body part of the target object is located.

As an example, the largest candidate region among the candidate regions corresponding to the target body part of the same-age objects may be used as the target region.

As an example, the smallest region containing the candidate regions corresponding to the target body part of the same-age objects may be determined to be the target region.

Optionally, the safe region and the dangerous region are pre-established. It can be understood that, in a vehicle, the region where a car-door gap is located, the region where a car-window opening press key is located, the region where a car-door handle is located and the region where a safety seat is located are usually fixed and unchanged. Therefore, the dangerous region and the safe region can be predetermined. For example, the region where a car-door gap is located is a dangerous region, the region where a car-window opening press key is located is a dangerous region, and the region where a car-door handle is located is a dangerous region. When a child is correctly sitting in a safety seat, the region where the child is located is a safe region.

Optionally, the safe region includes a first safe region and/or a second safe region, and the safe region is determined by: from a predetermined corresponding relation between ages and body-height thresholds, looking up a target body-height threshold corresponding to an age of the target object; and when the target object is sitting in a safety seat, determining, when an object having the target body-height threshold is correctly sitting in the safety seat, a region where the object is located to be the first safe region; and/or when the target object is not sitting in a safety seat, determining a region other than a predetermined dangerous region to be the second safe region, wherein the dangerous region includes at least one of a region where a door handle is located, a region where a car-window opening press key is located and a region where a car-door gap is located.

As an example, the safe regions in different situations may be completely different. As an example, the safe regions in different situations may be not completely the same (in other words, part of the regions overlap).

As an example, the first safe region does not contain a dangerous region.

The above-described first safe region and second safe region are merely examples, and do not limit the quantity and the areas of the safe regions according to the embodiments of the present application.

Optionally, a coordinate system may be established based on a certain articulation point (for example, the neck articulation point) of the target object as the origin, so as to obtain the relative position relation between the target region and the safe region.

Optionally, based on the position of the target body part of the target object at the current time, the target region where the target body part is located at a future time is determined; and whether the target region and the dangerous region have a coinciding part is determined.

As an example, the vehicle state includes but is not limited to the vehicle speed, and whether the vehicle is in the travelling state.

It can be understood that, at different vehicle states, the results of the determination on whether it is a dangerous situation are different. For example, when the vehicle is in the parking state, when the target object gets off from a safety seat, that should not be a dangerous situation. When the vehicle is in the travelling state, when the target object gets off from a safety seat, that is a dangerous situation. As another example, when the vehicle is in the parking state, when the target object places a hand within the region where a car-window opening press key is located, that is not a dangerous situation. When the vehicle is in the travelling state, and is having a high vehicle speed (for example, in an expressway), when the target object places a hand within the region where a car-window opening press key is located, that is a dangerous situation.

Optionally, the step D22 involves various cases, and the embodiments of the present application provide, without limitation, the following four cases.

The first case: when the vehicle state is a travelling state, the target object is sitting in a safety seat and the dangerous region is a region other than the first safe region, determining that the dangerous situation is that the target object disengages from the safety seat.

The second case: when the vehicle state is a travelling state, a child safety lock is not turned on and the dangerous region is the region where the door handle is located, determining that the dangerous situation is that the child safety lock is not turned on.

The third case: when the vehicle state is a stationary state and the dangerous region is the region where the car-door gap is located, determining that the dangerous situation is that the target object is about to be squeezed by a car door.

It can be understood that, when the vehicle state is the travelling state, the car doors are always closed, and therefore the probability that the target object is squeezed by a car door is nearly zero.

The fourth case: when the vehicle state is that a vehicle speed is greater than a preset value and the dangerous region is the region where the car-window opening press key is located, determining that the dangerous situation is that the target object is about to open a car window.

As an example, the preset value may be a speed per hour of 100km. In other words, it is determined whether the vehicle is travelling in an expressway. It can be understood that, when the vehicle is travelling in an expressway or the vehicle speed of the vehicle is excessively high, opening a car window is a very dangerous behavior. When the vehicle is not travelling in an expressway or the vehicle speed is low, opening a car window is not a dangerous behavior.

Optionally, the dangerous regions where the at least local region is belonged are different, and the dangerous situations of the target object at a future moment are different.

Optionally, the target object might emit a voice, for example, "I want to open the car window" or "I want to get off from the safety seat". Therefore, the target action of the target object at a future moment may be predicted by referring to the voice emitted by the target object and the action trajectory. The specific method includes the following steps E1 to E2.

Step E1: obtaining text information of the target object corresponding to voice information.

Optionally, because the position of the target object in the vehicle can be identified, the voice emitted by the target object is collected by using a microphone A in the vehicle adjacent to the target object, and the voice collected by the microphone A is used as the voice of the target object.

Optionally, because sounds emitted by children are different from sounds emitted by adults, it may be identified, based on the sound characteristics, which voice is the voice of the target object.

In an optional embodiment, the conversion from the voice information into the text information has various implementations, and the embodiments of the present application provide, without limitation, the following two implementations.

The first implementation of the conversion from the voice information into the text information includes the step of converting the voice information into the text information by using a voice-to-text conversion technique.

The second implementation of the conversion from the voice information into the text information includes the following method.

A voice identification system usually includes two parts, an acoustic model (AM) and a language model (LM). The acoustic model is a model that counts up the probability distribution of the voice features versus the phoneme units. The language model is a model that counts up the probability that a word sequence (word context) appears. The voice identification process includes, according to the weighted sum of the probability scores of the two models, obtaining the result of the highest score.

As an example, based on a voice activity detection (VAD) technique, frame splitting processing to the voice information may also be performed, to obtain a plurality of to-be-detected sound frames, simultaneously the acoustic features of the to-be-detected sound frames are obtained, and the acoustic features of the to-be-detected sound frames are sequentially input into a voice activity detection (VAD) model, wherein the VAD model is configured for outputting the probabilities that the to-be-detected sound frames are classified into initial consonants, vowels and noise, determining the first sound frame that is classified as a voice frame to be the starting point of a voice section, and determining the last sound frame that is classified as a voice frame to be the end point of the voice section; the voice section is obtained from the voice information, and the voice section is input into the voice identification system; and the voice section is converted into the text information by using the voice identification system.

Step E2: based on the text information and the action trajectory, predicting the target action of the target object at the future moment.

As an example, based on the action trajectory, a target action of the target object at a future moment is predicted; and subsequently, by using the text information, whether it is the target action is further determined.

For example, when the target action is an action of pulling a car-door handle, and the text information is "I want to open the door", then it is determined that the target action is an action of pulling a car-door handle. When the target action is an action of pulling a car-door handle, and the text information is "I want to open the car window", then it can be determined that the target action is an action of opening a car window.

In the embodiments of the present application, by using the text information to assist in predicting the target action of the target object at a future moment, the obtained target action is more accurate.

Optionally, the step S25 has various implementations, and the embodiments of the present application provide, without limitation, the following three implementations.

The first implementation of the step S25 includes the following step F11.

Step F11: executing a control strategy corresponding to the dangerous situation.

The second implementation of the step S25 includes the following steps F21 to F22.

Step F21: obtaining text information of the target object corresponding to voice information.

Step F22: executing a control strategy corresponding to the text information and the dangerous situation.

The third implementation of the step S25 includes the following steps F31 to F32.

Step F31: obtaining text information of the target object corresponding to voice information.

Step F32: executing a control strategy of the target object corresponding to an age, the text and the dangerous situation.

Optionally, the control strategy includes but is not limited to a prompting message.

As an example, the prompting message includes but is not limited to a voice prompting or a special-sound early-warning notice.

It can be understood that an object in the vehicle other than the target object (referred to as the guardian), after the prompting message is received, may pacify the target object, so as to prevent the target object from executing the target action, to prevent a danger.

Optionally, the control strategy further includes: detecting whether an article that the target object is interested in is contained in the vehicle, and if yes, then prompting the target object to view the article or prompting the guardian to pacify the target object by using the article. The target object might be drawn attention when viewing the article, so that the emotion of the target object is pacified, so as to prevent the target object from executing the target action, thereby a danger is prevented from happening.

As an example, the likes of the target object may be analyzed based on an AI (Artificial Intelligence) algorithm, to analyze out the article that the target object is interested in.

Artificial intelligence refers to theories, methods, techniques and application systems that use digital computers or machines controlled by digital computers to simulate, extend and expand the human intelligence, to sense the environment, obtain knowledge and use the knowledge to obtain the optimum result. In other words, artificial intelligence is a comprehensive technology of the computer science, and it attempts to know the substance of intelligence, and generate a new intelligent machine that can react in the modes similar to those of the human intelligence. Artificial intelligence also refers to studying the design principles and the implementation methods of various types of intelligent machines, to cause the machines to have the functions of sensing, reasoning and decision making.

The technology of artificial intelligence is a synthetic discipline, and involves extensive fields, including the techniques at the hardware level and the techniques at the software level. The basic technologies of artificial intelligence generally include sensors, dedicated artificial-intelligence chips, cloud computing, distributed storage, big-data processing techniques, operation/interaction systems, mechanical-electrical integration and so on. The software technologies of artificial intelligence mainly include a computer vision technology, a voice processing technology, a natural language processing technology and machine learning/deep learning technology as the major fields.

As an example, the article may be a toy or a terminal device. When the article is a terminal device, the terminal device may be controlled automatically to play a program that the target object is interested in.

Optionally, the control strategy further includes an intelligent guiding voice. The intelligent guiding voice is used to guide the target object not to execute the target action, for example, prompting the target object to leave the dangerous region.

Optionally, the control strategy further includes at least one of controlling a car window to close, controlling the vehicle speed to decrease, opening a children lock and controlling the terminal device to play a multimedia.

It can be understood that the specific contents of the prompting messages corresponding to different dangerous situations are different. For example, when the dangerous situation is that the target object disengages from a safety seat, then the prompting message is used to prompt the guardian that the target object is about to disengage from the safety seat. When the dangerous situation is that a child safety lock is not turned on, then the prompting message is used to prompt the guardian to turn on the child safety lock. When the dangerous situation is that the target object is about to be squeezed by a car door, then the prompting message is used to prompt the guardian that the target object is about to be squeezed by the car door. When the dangerous situation is that the target object is about to open a car window, then the prompting message is used to prompt the guardian that the target object is about to open the car window.

Optionally, the text information in the step F22 might contain a cry-or-scream sound of the target object, for example, "I must open the car window, wuwu". The danger class of the dangerous situation may be determined based on the text information. When the danger class is higher, the tone of the voice prompting message is more urgent, and/or the early-warning sound is louder or more frequent.

Optionally, in the step F32, when the terminal is controlled to play the multimedia, it may play a multimedia matching with the age of the target object.

It can be understood that the growth of children has four stages, namely, 0-1 year as the infancy, 1-4 years as the toddler period, 4-7 years as the preschool period and 7-12 years as the pueritia, and the physical and mental developments of the periods have different demands. A multimedia matching with the age of the target object may be played based on the demand of the child.

The method has been described in detail above. The method may be implemented by using apparatuses in various forms. Therefore, an apparatus will be described in detail in the specific below.

As shown in FIG. 6, FIG. 6 is a structural diagram of an apparatus for controlling vehicle-riding safety. The apparatus includes a first determining module 61, a first obtaining module 62, a predicting module 63, a second determining module 64 and an executing module 65, wherein:
the first determining module 61 is configured for determining a target object from objects that ride in a vehicle;
the first obtaining module 62 is configured for obtaining an action trajectory of the target object;
the predicting module 63 is configured for, based on the action trajectory, predicting a target action of the target object at a future moment;
the second determining module 64 is configured for, based on the target action and a vehicle state of the vehicle, determining a dangerous situation of the target object at the future moment; and
the executing module 65 is configured for executing a control strategy corresponding to the dangerous situation, wherein the control strategy includes at least a prompting message, and the prompting message is for prompting other objects than the target object that ride in the vehicle that the target object is about to be in danger.

Optionally, the second determining module includes:
a first obtaining unit configured for obtaining a target region where the target object is located when the target object is executing the target action; and
a first determining unit configured for, when at least local region of the target region is not located within a safe region that is predetermined, based on the vehicle state of the vehicle and a dangerous region where the at least local region is belonged, determining the dangerous situation of the target object at the future moment.

Optionally, the first obtaining module includes:
a second obtaining unit configured for obtaining a video containing the target object;
a third obtaining unit configured for obtaining human-body gestures of the target object in each frame image contained in the video, wherein each of the human-body gestures is formed by a plurality of articulation points; and
a second determining unit configured for, based on a variation trend of position information of same articulation points in the human-body gestures corresponding to the each frame image, determining the action trajectory of the target object.

Optionally, the second obtaining module includes:
a fourth obtaining unit configured for obtaining an age of the target object;
a looking-up unit configured for, from a predetermined corresponding relation between ages and body-height thresholds, looking up a target body-height threshold of the target object corresponding to an age;
a fifth obtaining unit configured for, based on the target body-height threshold and the human-body gestures of the target object, obtaining contours of body parts of the target object;
a third determining unit configured for determining a target body part executing the target action of the target object; and
a fourth determining unit configured for, based on position information of a contour of the target body part at a current time, determining the target region where the contour of the target body part is located when the target body part is executing the target action.

In an optional embodiment, the predicting module includes:
a sixth obtaining unit configured for obtaining text information of the target object corresponding to voice information; and
a predicting unit configured for, based on the text information and the action trajectory, predicting the target action of the target object at the future moment.

Optionally, the safe region includes a first safe region and/or a second safe region, and the apparatus further includes:
a looking-up module configured for, from a predetermined corresponding relation between ages and body-height thresholds, looking up a target body-height threshold corresponding to an age of the target object; a third determining module configured for, when the target object is sitting in a safety seat, determining, when an object having the target body-height threshold is correctly sitting in the safety seat, a region where the object is located to be the first safe region; and/or a fourth determining module configured for, when the target object is not sitting in the safety seat, determining a region other than a predetermined dangerous region to be the second safe region, wherein the dangerous region includes at least one of a region where a door handle is located, a region where a car-window opening press key is located and a region where a car-door gap is located.

Optionally, the second determining module includes:
a fifth determining unit configured for, when the vehicle state is a travelling state, the target object is sitting in the safety seat and the dangerous region is a region other than the first safe region, determining that the dangerous situation is that the target object disengages from the safety seat;
a sixth determining unit configured for, when the vehicle state is the travelling state, a child safety lock is not turned on and the dangerous region is a region where the door handle is located, determining that the dangerous situation is that the child safety lock is not turned on;
a seventh determining unit configured for, when the vehicle state is a stationary state and the dangerous region is a region where the car-door gap is located, determining that the dangerous situation is that the target object is about to be squeezed by a car door; and
an eighth determining unit configured for, when the vehicle state is that a vehicle speed is greater than a preset value and the dangerous region is a region where the car-window opening press key is located, determining that the dangerous situation is that the target object is about to open a car window.

The specific modes of the operations performed by the modules of the apparatus have already been described in detail with the method, and will not be explained and described in detail herein.

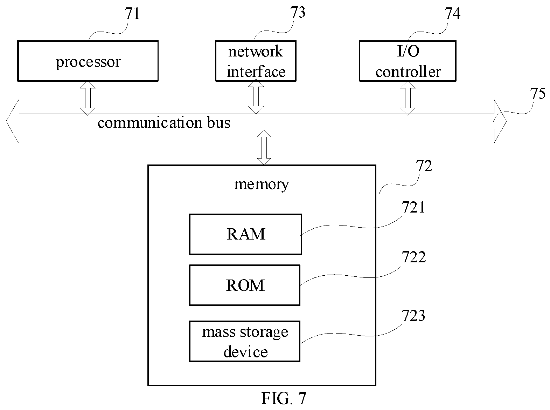

FIG. 7 is a block diagram of an apparatus for an electronic device.

The electronic device includes but is not limited to a processor 71, a memory 72, a network interface 73, an I/O controller 74 and a communication bus 75.

It should be noted that a person skilled in the art can understand that the structure of the electronic device shown in FIG. 7 does not limit the electronic device, and the electronic device may include components more or fewer than those shown in FIG. 7 or a combination of some of the components, or has a different arrangement of the components.

The component parts of the electronic device will be described specific below with reference to FIG. 7:
The processor 71 is the controlling center of the electronic device, is connected to the parts of the entire electronic device by various interfaces and lines, and, by executing the software programs and/or modules stored in the memory 72, and invoking the data stored in the memory 72, performs the various functions of the electronic device and processes the data, thereby the electronic device is overall monitored. The processor 71 may include one or more processing units. As an example, the processor 71 may be integrated with an application processor and a modulation-demodulation processor, wherein the application processor mainly handles the operating system, the user interface, the application programs and so on, and the modulation-demodulation processor mainly handles the wireless communication. It can be understood that the modulation-demodulation processor may not be integrated into the processor 71.

The processor 71 may be a central processing unit (CPU), or an application specific integrated circuit (ASIC), or one or more integrated circuits configured for implementing the embodiments of the present disclosure, and so on.

The memory 72 might include an internal memory, for example, a high-speed random-access memory (RAM) 721 and a read-only memory (ROM) 722, and may further include a mass storage device 723, for example, at least one magnetic-disk storage and so on. Certainly, the electronic device may further include hardware required by other services.

The memory 72 is configured to store an instruction executable by the processor 71. The processor 71 has the function of implementing the method for controlling the vehicle-riding safety.

A wired or wireless network interface 73 is configured to connect the electronic device to the network.

The processor 71, the memory 72, the network interface 73 and the I/O controller 74 may be interconnected by the communication bus 75. The communication bus may be an ISA (Industry Standard Architecture) bus, a PCI (Peripheral Component Interconnect) bus, an EISA (Extended Industry Standard Architecture) bus and so on. The bus may include an address bus, a data bus, a control bus and so on.

The electronic device may be implemented by using one or more application specific integrated circuits (ASIC), digital signal processors (DSP), digital signal processing devices (DSPD), programmable logic devices (PLD), field-programmable gate arrays (FPGA), controllers, microcontrollers, microprocessors or other electronic elements, to implement the method for controlling the vehicle-riding safety.

A storage medium is also provided containing an instruction, for example, the memory 72 containing an instruction, and the instruction is executable by the processor 71 of the electronic device to implement the method. Optionally, the storage medium may be a non-transitory computer-readable storage medium. For example, the non-transitory computer-readable storage medium may be a ROM, a Random Access Memory (RAM), a CD-ROM, a magnetic tape, a floppy disk, an optical data storage device and so on.

A computer-readable storage medium is further provided, which may be directly loaded into an internal memory of a computer, for example, the memory 72, and contains a software code, and the computer program, after loaded into and executed by the computer, can implement the steps of any one of the embodiments of the method for controlling the vehicle-riding safety.

A computer program product is further provided, which may be directly loaded into an internal memory of a computer, for example, the memory included by the electronic device, and contains a software code, and the computer program, after loaded into and executed by the computer, can implement the steps of any one of the embodiments of the method for controlling the vehicle-riding safety.

It should be noted that the features set forth in the embodiments of the description may be replaced by or combined with each other. Regarding the device or system embodiments, because they are substantially similar to the process embodiments, they are described simply, and the related parts may be referred to the description on the process embodiments.

It should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or devices that include a series of elements do not only include those elements, but also include other elements that are not explicitly listed, or include the elements that are inherent to such processes, methods, articles or devices. Unless further limitation is set forth, an element defined by the wording "including a ..." does not exclude additional same element in the process, method, article or device including the element.

The steps of the method or algorithm described with reference to the embodiments disclosed herein may be implemented directly by using hardware, a software module executed by a processor or a combination thereof. The software module may be embedded in a Random Access Memory (RAM), an internal memory, a read-only memory (ROM), an electrically programmable ROM, an electrically erasable programmable ROM, a register, a hard disk, a removable disk, a CD-ROM, or a storage medium in any other form well known in the art.

## Claims

1. A method for controlling vehicle-riding safety, comprising:
(S21) determining a target object from objects that ride in a vehicle;
(S22) obtaining an action trajectory of the target object;
(S23) based on the action trajectory, predicting a target action of the target object at a future moment;
(S24) based on the target action and a vehicle state of the vehicle, determining a dangerous situation of the target object at the future moment; and
(S25) executing a control strategy corresponding to the dangerous situation, wherein the control strategy comprises at least a prompting message, and the prompting message is for prompting other objects than the target object that ride in the vehicle that the target object is about to be in danger.

2. The method for controlling the vehicle-riding safety according to claim 1, wherein the step of, (S24) based on the target action and the vehicle state of the vehicle, determining the dangerous situation of the target object at the future moment comprises:
obtaining a target region representing a predicted position where the target object is located at the future moment when the target object executes the target action;
defining at least one local region within the target region;
determining whether the local region is located within a predetermined safe region;
when the at least one local region of the target region is not located within the safe region, identifying, based on the vehicle state of the vehicle, a dangerous region to which the at least one local region belongs, and determining the dangerous situation of the target object at the future moment based on the association of the local region with the dangerous region.

3. The method for controlling the vehicle-riding safety according to claim 1, wherein the step of (S22) obtaining the action trajectory of the target object comprises:
obtaining a video containing the target object;
obtaining human-body gestures of the target object in each frame image contained in the video, wherein each of the human-body gestures is formed by a plurality of articulation points; and
based on a variation trend of position information of same articulation points in the human-body gestures corresponding to the each frame image, determining the action trajectory of the target object.

4. The method for controlling the vehicle-riding safety according to claim 3, wherein the step of obtaining the target region where the target object is located when the target object executes the target action comprises:
obtaining an age of the target object;
determining a target body-height threshold from a predetermined corresponding relation between age and body-height values,;
based on the target body-height threshold and the human-body gestures of the target object, detecting contours of body parts of the target object;
identifying a target body part associated with the target action of the target object; and
determining the target region based on position information of a contour of the target body part at a current time and a predicted movement derived from the gesture.

5. The method for controlling the vehicle-riding safety according to any one of claims 1 to 4, wherein the step of, based on the action trajectory, predicting the target action of the target object at the future moment comprises:
obtaining text information of the target object corresponding to voice information; and
predicting the target action of the target object at the future moment based on the action trajectory, and, when the action trajectory is ambiguous, further using the text information to assist in determining the target action.

6. The method for controlling the vehicle-riding safety according to claim 4 or 5, wherein the safe region comprises a first safe region and/or a second safe region, and the safe region is determined by:
looking up a target body-height threshold of the target object from a predetermined corresponding relation between ages and body-height thresholds, corresponding to the age of the target object; and
when the target object is sitting in a safety seat, determining, when an object having the target body-height threshold is correctly sitting in the safety seat, a region where the object is located to be the first safe region; and/or
when the target object is not sitting in the safety seat, determining a region other than a predetermined dangerous region to be the second safe region;
wherein the dangerous region includes at least one of: a region where a door handle is located, a region where a car-window opening press key is located, and a region where a car-door gap is located.

7. The method for controlling the vehicle-riding safety according to claim 6, wherein the step of, based on the vehicle state of the vehicle and the dangerous region to which the at least local region belongs, determining the dangerous situation of the target object at the future moment comprises:
when the vehicle state is a travelling state, the target object is sitting in the safety seat, and the at least one local region of the target region lies outside the first safe region, determining that the dangerous situation is that the target object disengages from the safety seat;
when the vehicle state is the travelling state, the child safety lock is not turned on, and the at least one local region lies in a region where the door handle is located, determining that the dangerous situation is that the child safety lock is not turned on;
when the vehicle state is a stationary state, and the at least one local region lies within a region where the car-door gap is located, determining that the dangerous situation is that the target object is about to be squeezed by a car door; and
when the vehicle state is that a vehicle speed is greater than a preset value and the at least one local region lies within a region where the car-window opening press key is located, determining that the dangerous situation is that the target object is about to open a car window.

8. An electronic device, wherein the electronic device comprises:
a processor (71); and
a memory (71) configured to store an instruction executable by the processor (71); and
the processor (71) is configured to execute the instruction to implement the method for controlling the vehicle-riding safety according to any one of claims 1 to 7.

9. A computer program product, comprising a computer program/instruction, wherein the computer program/instruction, when executed by a processor, implements the method for controlling the vehicle-riding safety according to any one of claims 1 to 7.

10. A non-transitory computer-readable storage medium, wherein when an instruction in the computer-readable storage medium is executed by a processor of an electronic device, the electronic device is enabled to be capable of implementing the method for controlling the vehicle-riding safety according to any one of claims 1 to 7.

## Patentansprüche

1. Verfahren zum Steuern der Mitfahrsicherheit, aufweisend:
(S21) Bestimmen eines Zielobjekts aus Objekten, die in einem Fahrzeug mitfahren;
(S22) Erhalten einer Aktionstrajektorie des Zielobjekts;
(S23) auf Grundlage der Aktionstrajektorie Vorhersagen einer Zielaktion des Zielobjekts zu einem zukünftigen Zeitpunkt;
(S24) auf Grundlage der Zielaktion und eines Fahrzeugzustands des Fahrzeugs Bestimmen einer Gefahrensituation des Zielobjekts zu dem zukünftigen Zeitpunkt; und
(S25) Ausführen einer Steuerstrategie, die der Gefahrensituation entspricht, wobei die Steuerstrategie mindestens eine Hinweismeldung aufweist und die Hinweismeldung dazu dient, andere Objekte als das Zielobjekt, die in dem Fahrzeug mitfahren, darauf hinzuweisen, dass das Zielobjekt im Begriff ist, in Gefahr zu geraten.

2. Verfahren zum Steuern der Mitfahrsicherheit nach Anspruch 1, wobei der Schritt (S24) des Bestimmens der Gefahrensituation des Zielobjekts zu dem zukünftigen Zeitpunkt auf Grundlage der Zielaktion und des Fahrzeugzustands des Fahrzeugs aufweist:
Erhalten eines Zielbereichs, der eine vorhergesagte Position darstellt, in der sich das Zielobjekt zu dem zukünftigen Zeitpunkt befindet, wenn das Zielobjekt die Zielaktion ausführt,
Definieren mindestens eines lokalen Bereichs innerhalb des Zielbereichs;
Bestimmen, ob der lokale Bereich innerhalb eines vorbestimmten sicheren Bereichs angeordnet ist;
wenn der mindestens eine lokale Bereich des Zielbereichs nicht innerhalb des sicheren Bereichs angeordnet ist, Identifizieren eines Gefahrenbereichs, zu dem der mindestens eine lokale Bereich gehört, auf Grundlage des Fahrzeugzustands des Fahrzeugs, und Bestimmen der Gefahrensituation des Zielobjekts zu dem zukünftigen Zeitpunkt auf Grundlage der Verknüpfung des lokalen Bereichs mit dem Gefahrenbereich.

3. Verfahren zum Steuern der Mitfahrsicherheit nach Anspruch 1, wobei der Schritt (S22) des Erhaltens der Aktionstrajektorie des Zielobjekts aufweist:
Erhalten eines Videos, das das Zielobjekt enthält;
Erhalten von Körperhaltungen des Zielobjekts in jedem Einzelbild, das in dem Video enthalten ist, wobei jede der Körperhaltungen durch mehrere Gelenkpunkte gebildet ist; und
auf Grundlage eines Variationstrends von Positionsinformationen gleicher Gelenkpunkte in den Körperhaltungen, die dem jeweiligen Einzelbild entsprechen, Bestimmen der Aktionstrajektorie des Zielobjekts.

4. Verfahren zum Steuern der Mitfahrsicherheit nach Anspruch 3, wobei der Schritt des Erhaltens des Zielbereichs, in dem sich das Zielobjekt befindet, wenn das Zielobjekt die Zielaktion ausführt, aufweist:
Erhalten eines Alters des Zielobjekts;
Bestimmen eines Zielkörpergrößenschwellenwerts aus einer vorbestimmten Zuordnungsbeziehung zwischen Alter und Körpergrößenwerten,;
auf Grundlage des Zielkörpergrößenschwellenwerts und der Körperhaltungen des Zielobjekts Erfassen von Konturen von Körperteilen des Zielobjekts;
Identifizieren eines Zielkörperteils, das der Zielaktion des Zielobjekts zugeordnet ist; und
Bestimmen des Zielbereichs auf Grundlage von Positionsinformationen einer Kontur des Zielkörperteils zu einem aktuellen Zeitpunkt und einer aus der Körperhaltung abgeleiteten vorhergesagten Bewegung.

5. Verfahren zum Steuern der Mitfahrsicherheit nach einem der Ansprüche 1 bis 4, wobei der Schritt des Vorhersagens der Zielaktion des Zielobjekts zu dem zukünftigen Zeitpunkt auf Grundlage der Aktionstrajektorie aufweist:
Erhalten von Textinformationen des Zielobjekts, die einer Sprachinformation entsprechen; und
Vorhersagen der Zielaktion des Zielobjekts zu dem zukünftigen Zeitpunkt auf Grundlage der Aktionstrajektorie und, wenn die Aktionstrajektorie mehrdeutig ist, ferner Verwenden der Textinformationen, um beim Bestimmen der Zielaktion zu helfen.

6. Verfahren zum Steuern der Mitfahrsicherheit nach Anspruch 4 oder 5, wobei der sichere Bereich einen ersten sicheren Bereich und/oder einen zweiten sicheren Bereich aufweist und der sichere Bereich bestimmt wird durch:
Nachschlagen eines Zielkörpergrößenschwellenwerts des Zielobjekts aus einer vorbestimmten Zuordnungsbeziehung zwischen Altern und Körpergrößenschwellenwerten, entsprechend dem Alter des Zielobjekts; und
wenn das Zielobjekt in einem Sicherheitssitz sitzt, Bestimmen, wenn ein Objekt, das den Zielkörpergrößenschwellenwert aufweist, korrekt in dem Sicherheitssitz sitzt, eines Bereichs, in dem sich das Objekt befindet, als den ersten sicheren Bereich; und/oder
wenn das Zielobjekt nicht in dem Sicherheitssitz sitzt, Bestimmen eines Bereichs außerhalb eines vorbestimmten Gefahrenbereichs als den zweiten sicheren Bereich;
wobei der Gefahrenbereich mindestens eines aufweist von: einem Bereich, in dem ein Türgriff angeordnet ist, einem Bereich, in dem eine Autofensteröffnungsdrucktaste angeordnet ist, und einem Bereich, in dem ein Autotürspalt angeordnet ist.

7. Verfahren zum Steuern der Mitfahrsicherheit nach Anspruch 6, wobei der Schritt des Bestimmens der Gefahrensituation des Zielobjekts zu dem zukünftigen Zeitpunkt auf Grundlage des Fahrzeugzustands des Fahrzeugs und des Gefahrenbereichs, zu dem der mindestens lokale Bereich gehört, aufweist:
wenn der Fahrzeugzustand ein Fahrzustand ist, das Zielobjekt in dem Sicherheitssitz sitzt und der mindestens eine lokale Bereich des Zielbereichs außerhalb des ersten sicheren Bereichs liegt, Bestimmen, dass die Gefahrensituation darin besteht, dass sich das Zielobjekt vom Sicherheitssitz löst;
wenn der Fahrzeugzustand der Fahrzustand ist, die Kindersicherung nicht eingeschaltet ist und der mindestens eine lokale Bereich in einem Bereich liegt, in dem der Türgriff angeordnet ist, Bestimmen, dass die Gefahrensituation darin besteht, dass die Kindersicherung nicht eingeschaltet ist;
wenn der Fahrzeugzustand ein Stillstandszustand ist und der mindestens eine lokale Bereich innerhalb eines Bereichs liegt, in dem der Autotürspalt angeordnet ist, Bestimmen, dass die Gefahrensituation darin besteht, dass das Zielobjekt im Begriff ist, von einer Autotür eingeklemmt zu werden; und
wenn der Fahrzeugzustand darin besteht, dass eine Fahrzeuggeschwindigkeit größer als ein voreingestellter Wert ist, und der mindestens eine lokale Bereich innerhalb eines Bereichs liegt, in dem die Autofensteröffnungsdrucktaste angeordnet ist, Bestimmen, dass die Gefahrensituation darin besteht, dass das Zielobjekt im Begriff ist, ein Autofenster zu öffnen.

8. Elektronische Vorrichtung, wobei die elektronische Vorrichtung aufweist:
einen Prozessor (71); und
einen Speicher (71), der dazu ausgebildet ist, eine durch den Prozessor (71) ausführbare Anweisung zu speichern; und
der Prozessor (71) ist dazu ausgebildet, die Anweisung auszuführen, um das Verfahren zum Steuern der Mitfahrsicherheit nach einem der Ansprüche 1 bis 7 zu implementieren.

9. Computerprogrammprodukt, aufweisend ein Computerprogramm/eine Anweisung, wobei das Computerprogramm/die Anweisung bei Ausführung durch einen Prozessor das Verfahren zum Steuern der Mitfahrsicherheit nach einem der Ansprüche 1 bis 7 implementiert.

10. Nichtflüchtiges computerlesbares Speichermedium, wobei dann, wenn eine Anweisung in dem computerlesbaren Speichermedium von einem Prozessor einer elektronischen Vorrichtung ausgeführt wird, die elektronische Vorrichtung in die Lage versetzt wird, das Verfahren zum Steuern der Mitfahrsicherheit nach einem der Ansprüche 1 bis 7 implementieren zu können.

## Revendications

1. Procédé pour contrôler et assurer la sécurité de conduite d'un véhicule, comprenant :
(S21) la détermination d'un objet cible parmi des objets qui sont conduits dans un véhicule ;
(S22) l'obtention d'une trajectoire d'action de l'objet cible ;
(S23) sur la base de la trajectoire d'action, la prédiction d'une action cible de l'objet cible à un instant futur ;
(S24) sur la base de l'action cible et d'un état de véhicule du véhicule, la détermination d'une situation dangereuse de l'objet cible à l'instant futur ; et
(S25) l'exécution d'une stratégie de contrôle qui correspond à la situation dangereuse, dans lequel la stratégie de contrôle comprend au moins un message d'alerte, et le message d'alerte a pour but d'alerter d'autres objets que l'objet cible qui sont conduits dans le véhicule du fait que l'objet cible est sur le point d'être en danger.

2. Procédé pour contrôler et assurer la sécurité de conduite d'un véhicule selon la revendication 1, dans lequel l'étape (S24) de détermination de la situation dangereuse de l'objet cible à l'instant futur qui est basée sur l'action cible et sur l'état de véhicule du véhicule comprend :
l'obtention d'une région cible qui représente une position prédite au niveau de laquelle l'objet cible se trouve à l'instant futur lorsque l'objet cible exécute l'action cible ;
la définition d'au moins une région locale à l'intérieur de la région cible ; et
la détermination de si la région locale est située à l'intérieur d'une région de sécurité prédéterminée ;
lorsque l'au moins une région locale de la région cible n'est pas située à l'intérieur de la région de sécurité, l'identification, sur la base de l'état de véhicule du véhicule, d'une région dangereuse à laquelle l'au moins une région locale appartient et la détermination de la situation dangereuse de l'objet cible à l'instant futur sur la base de l'association de la région locale avec la région dangereuse.

3. Procédé pour contrôler et assurer la sécurité de conduite d'un véhicule selon la revendication 1, dans lequel l'étape (S22) d'obtention de la trajectoire d'action de l'objet cible comprend :
l'obtention d'une vidéo qui contient l'objet cible ;
l'obtention de gestes de corps d'être humain de l'objet cible dans chaque image de trame qui est contenue dans la vidéo, dans lequel chacun des gestes de corps d'être humain est formé par une pluralité de points d'articulation ; et
sur la base d'une tendance de variation d'information de position de mêmes points d'articulation dans les gestes de corps d'être humain correspondant à chaque image de trame, la détermination de la trajectoire d'action de l'objet cible.

4. Procédé pour contrôler et assurer la sécurité de conduite d'un véhicule selon la revendication 3, dans lequel l'étape d'obtention de la région cible au niveau de laquelle l'objet cible est situé lorsque l'objet cible exécute l'action cible comprend :
l'obtention d'un âge de l'objet cible ;
la détermination d'un seuil de taille de corps cible à partir d'une relation de correspondance prédéterminée entre des valeurs d'âge et de taille de corps ;
sur la base du seuil de taille de corps cible et des gestes de corps d'être humain de l'objet cible, la détection de contours de parties de corps de l'objet cible ;
l'identification d'une partie de corps cible qui est associée à l'action cible de l'objet cible ; et
la détermination de la région cible sur la base d'une information de position d'un contour de la partie de corps cible à un temps courant et d'un mouvement prédit qui est dérivé à partir du geste.

5. Procédé pour contrôler et assurer la sécurité de conduite d'un véhicule selon l'une quelconque des revendications 1 à 4, dans lequel l'étape de prédiction de l'action cible de l'objet cible à l'instant futur qui est basée sur la trajectoire d'action comprend :
l'obtention d'une information textuelle de l'objet cible qui correspond à une information vocale ; et
la prédiction de l'action cible de l'objet cible à l'instant futur sur la base de la trajectoire d'action et, lorsque la trajectoire d'action est ambiguë, en outre en utilisant l'information textuelle pour contribuer à déterminer l'action cible.

6. Procédé pour contrôler et assurer la sécurité de conduite d'un véhicule selon la revendication 4 ou 5, dans lequel la région de sécurité comprend une première région de sécurité et/ou une seconde région de sécurité, et la région de sécurité est déterminée au moyen de :
la recherche d'un seuil de taille de corps cible de l'objet cible à partir d'une relation de correspondance prédéterminée entre des âges et des seuils de taille de corps, en correspondance avec l'âge de l'objet cible ; et
lorsque l'objet cible est assis dans un siège de sécurité, la détermination, lorsqu'un objet qui présente le seuil de taille de corps cible est assis correctement dans le siège de sécurité, d'une région au niveau de laquelle l'objet est situé comme étant la première région de sécurité ; et/ou
lorsque l'objet cible n'est pas assis dans le siège de sécurité, la détermination d'une région autre qu'une région dangereuse prédéterminée comme étant la seconde région de sécurité ;
dans lequel la région dangereuse inclut au moins une région parmi : une région au niveau de laquelle une poignée de portière est située, une région au niveau de laquelle un bouton de commande d'ouverture de vitre de voiture se trouve et une région au niveau de laquelle un jeu de portière de voiture se trouve.

7. Procédé pour contrôler et assurer la sécurité de conduite d'un véhicule selon la revendication 6, dans lequel l'étape de détermination de la situation dangereuse de l'objet cible à l'instant futur qui est basée sur l'état de véhicule du véhicule et sur la région dangereuse à laquelle l'au moins une région locale appartient comprend :
lorsque l'état de véhicule est un état de déplacement, que l'objet cible est assis dans le siège de sécurité et que l'au moins une région locale de la région cible se trouve à l'extérieur de la première région de sécurité, la détermination du fait que la situation dangereuse consiste en ce que l'objet cible est désengagé du siège de sécurité ;
lorsque l'état de véhicule est l'état de déplacement, que le verrouillage de sécurité pour enfant n'est pas enclenché et que l'au moins une région locale se trouve dans une région au niveau de laquelle la poignée de portière est située, la détermination du fait que la situation dangereuse consiste en ce que le verrouillage de sécurité pour enfant n'est pas enclenché ;
lorsque l'état de véhicule est un état d'immobilisation et que l'au moins une région locale se trouve à l'intérieur d'une région au niveau de laquelle le jeu de portière de voiture est situé, la détermination du fait que la situation dangereuse consiste en ce que l'objet cible est sur le point d'être coincé par une portière de voiture ; et
lorsque l'état de véhicule consiste en ce qu'une vitesse de véhicule est supérieure à une valeur prédéfinie et que l'au moins une région locale se trouve à l'intérieur d'une région au niveau de laquelle le bouton de commande d'ouverture de vitre de voiture est situé, la détermination du fait que la situation dangereuse consiste en ce que l'objet cible est sur le point d'ouvrir une vitre de voiture.

8. Dispositif électronique, dans lequel le dispositif électronique comprend :
un processeur (71) ; et
une mémoire (71) configurée pour stocker une instruction qui peut être exécutée par le processeur (71) ; et
le processeur (71) est configuré pour exécuter l'instruction afin de mettre en œuvre le procédé pour contrôler et assurer la sécurité de conduite d'un véhicule selon l'une quelconque des revendications 1 à 7.

9. Produit de programme informatique, comprenant un programme/une instruction informatique, dans lequel le programme/l'instruction informatique, lorsqu'il/elle est exécuté(e) par un processeur, met en œuvre le procédé pour contrôler et assurer la sécurité de conduite d'un véhicule selon l'une quelconque des revendications 1 à 7.

10. Support de stockage lisible par ordinateur non transitoire, dans lequel, lorsqu'une instruction dans le support de stockage lisible par ordinateur est exécutée par un processeur d'un dispositif électronique, le dispositif électronique est rendu opérationnel pour pouvoir mettre en œuvre le procédé pour contrôler et assurer la sécurité de conduite d'un véhicule selon l'une quelconque des revendications 1 à 7.
